(19) Europäisches Patentamt
European Patent Office
Office européen des brevets

(11) **EP 1 878 108 B1**

(12) **FASCICULE DE BREVET EUROPEEN**

(45) Date de publication et mention de la délivrance du brevet:
**22.04.2020 Bulletin 2020/17**

(21) Numéro de dépôt: **06708779.1**

(22) Date de dépôt: **15.03.2006**

(51) Int Cl.:
***H02N 1/00*** *(2006.01)*

(86) Numéro de dépôt international:
**PCT/EP2006/060758**

(87) Numéro de publication internationale:
**WO 2006/097491 (21.09.2006 Gazette 2006/38)**

(54) **PROCEDE ET DISPOSITIF POUR DEPLACER UN ELEMENT A ENTRAINER UTILISANT UN ELEMENT ACTIONNEUR FORME PAR GRAVURE DANS UN MATERIAU SEMI-CONDUCTEUR**

EINRICHTUNG UND VERFAHREN ZUR VERSTELLUNG EINER ANTRIEB, MIT AKTUATORELEMENT IN HALBLEITERMATERIAL GEÄTZTEN

METHOD AND DEVICE FOR MOVING AN ELEMENT TO BE DRIVEN USING AN ACTUATING ELEMENT FORMED BY ETCHING IN A SEMICONDUCTOR MATERIAL

(84) Etats contractants désignés:
**CH DE ES GB IT LI NL**

(30) Priorité: **18.03.2005 FR 0502699**

(43) Date de publication de la demande:
**16.01.2008 Bulletin 2008/03**

(73) Titulaire: **Silmach**
**25000 Besançon (FR)**

(72) Inventeurs:
• **LE MOAL, Patrice**
**F-25000 Besancon (FR)**
• **BOURBON, Gilles**
**F-25000 Besancon (FR)**

• **MINOTTI, Patrice**
**F-25660 Gennes (FR)**
• **JOSEPH, Eric**
**F-25170 Chaucenne (FR)**

(74) Mandataire: **Regimbeau**
**20, rue de Chazelles**
**75847 Paris Cedex 17 (FR)**

(56) Documents cités:
| | |
|---|---|
| WO-A-01/09519 | DE-A1- 2 842 488 |
| FR-A- 2 809 549 | FR-A- 2 852 111 |
| US-A- 4 579 014 | US-A1- 2004 159 813 |
| US-B1- 6 211 599 | US-B1- 6 313 562 |
| US-B1- 6 313 562 | US-B1- 6 465 929 |

**Description**

L'invention concerne le domaine des microsystèmes électromécaniques (MEMS).

Ces microsystèmes électromécaniques sont formés par gravure dans des blocs ou plaquettes en matériau semi-conducteur, généralement en silicium.

Le document FR 2 852 111 (publié le 10 septembre 2004) décrit un dispositif d'horloge comprenant une roue dentée, un élément d'entraînement apte à engrener séquentiellement avec la roue dentée et un actionneur apte à déplacer l'élément d'entraînement selon un mouvement d'hystérésis de sorte que l'élément d'entraînement engrène avec des dents successives de la roue. Dans un tel dispositif, l'actionneur comprend deux modules électrostatiques d'actionnement. L'un des modules est apte à déplacer l'élément d'entraînement selon une direction radiale par rapport à la roue et l'autre module est apte à déplacer l'élément d'entraînement selon une direction tangentielle par rapport à la roue.

Ce dispositif requiert l'utilisation d'un système d'adressage pour que les modules électrostatiques d'actionnement soient commandés par des signaux déphasés de manière à produire le mouvement d'hystérésis de l'élément d'entraînement. Le mouvement d'hystérésis de l'élément d'entraînement génère la rotation de la roue dentée.

Le document US 6 313 562 décrit un dispositif MEMS comprenant une roue dentée, un élément d'entraînement apte à engrener séquentiellement avec la roue dentée et un actionneur apte à déplacer l'élément d'entraînement selon un mouvement d'hystérésis de sorte que l'élément d'entraînement engrène avec des dents successives de la roue. L'ensemble des éléments du dispositif est formé à partir d'une même plaquette de silicium.

Le document US 4 579 014 décrit une minuterie comprenant une roue dentée, un élément d'entraînement apte à engrener séquentiellement avec la roue dentée et un actionneur apte à déplacer l'élément d'entraînement selon un mouvement d'hystérésis de sorte que l'élément d'entraînement engrène avec des dents successives de la roue.

Un but de l'invention est de proposer un dispositif plus simple pour déplacer un élément à entraîner.

A cet effet, l'invention propose un dispositif selon la revendication 1.

Un tel dispositif ne nécessite qu'un seul élément actionneur et peut fonctionner grâce à un seul signal de commande.

Par conséquent, l'adressage du dispositif est simplifié.

En outre, l'invention ne requiert l'alimentation que d'une seule voie d'adressage et permet ainsi de réduire l'énergie consommée par le dispositif par rapport à un dispositif à deux modules.

Le dispositif de l'invention peut en outre présenter les caractéristiques suivantes :

- l'élément à entraîner est un élément denté,
- les dents de l'élément à entraîner sont asymétriques,
- chaque dent de l'élément à entraîner présente une face d'entraînement sur laquelle l'élément d'entraînement vient en contact pour tracter l'élément à entraîner au cours d'une première alternance et une face de guidage sur laquelle l'élément d'entraînement glisse au cours d'une deuxième alternance,
- le dispositif est agencé de sorte que :

    au cours de la première alternance, l'élément d'entraînement est engagé entre deux dents de l'élément à entraîner,
    au cours de la deuxième alternance, l'élément d'entraînement franchit l'une des deux dents et vient s'engager entre deux autres dents adjacentes de l'élément à entraîner,

- l'élément d'entraînement comprend au moins une lame flexible agencée de sorte qu'au cours de la première alternance l'élément d'entraînement est déplacé dans un premier sens, ce qui entraîne la déformation de la lame flexible, et au cours de la deuxième alternance, l'élément d'entraînement est déplacé dans un deuxième sens, opposé au premier sens, par retour élastique de la lame flexible,
- l'élément d'entraînement franchit l'une des deux dents par restitution d'énergie élastique résiduelle emmagasinée dans la lame flexible,
- le dispositif comprend un cliquet anti-retour apte à bloquer l'élément à entraîner au cours de la deuxième alternance,
- le cliquet anti-retour comprend un élément d'indexage apte à :

    au cours de la première alternance du mouvement généré par l'élément actionneur, glisser sur l'élément à entraîner,
    au cours de la deuxième alternance, venir en prise avec l'élément à entraîner pour bloquer l'élément à entraîner,

- le cliquet présente une face de guidage destinée à glisser sur l'élément à entraîner au cours de la première alternance et une face de blocage sur laquelle l'élément à entraîner vient en contact pour bloquer l'élément à entraîner au cours de la deuxième alternance,
- l'élément à entraîner est un élément denté présentant un pas, l'élément d'entraînement comprend une face de guidage destinée à entrer en contact avec l'élément à entraîner au niveau d'un point de contact lors du glissement de l'élément d'entraînement sur l'élément à entraîner,

et dans lequel au repos :

$$\begin{cases} d_2 \prec p - e + k \cdot p \\ d_2 \succ k \cdot p \end{cases}$$

où :

$p$ est le pas de l'élément à entraîner,
$e$ est la distance entre un point de contact de la face de guidage et la face d'entraînement de l'élément d'entraînement,
$d_2$ est la distance entre le point de contact de la face de guidage de l'élément d'entraînement et la face de blocage du cliquet,
et $k$ est un entier positif,

- le dispositif comprend des moyens de précontrainte élastique pour maintenir l'élément d'entraînement contre l'élément à entraîner.

L'invention propose en outre, selon la revendication 13, un procédé de fonctionnement du dispositif défini précédemment, comprenant étapes selon lesquelles :

on commande l'élément actionneur pour qu'il génère un mouvement alternatif pour déplacer l'élément d'entraînement,
au cours d'une première alternance du mouvement généré par l'élément actionneur, l'élément d'entraînement vient en prise avec l'élément à entraîner pour tracter l'élément à entraîner,
au cours d'une deuxième alternance en sens opposé générée par l'élément actionneur, l'élément d'entraînement glisse sur l'élément à entraîner,
de sorte que l'élément à entraîner est déplacé selon un mouvement pas à pas par l'élément d'entraînement.

D'autres caractéristiques et avantage ressortiront encore de la description qui suit, laquelle est purement illustrative et non limitative et doit être lue en regard des figures annexées, parmi lesquelles :

- la figure 1 représente de manière schématique un dispositif conforme à un mode de réalisation de l'invention,
- la figure 2 représente de manière schématique un élément actionneur,
- la figure 3 représente de manière schématique les positions relatives d'un élément d'entraînement, d'un cliquet anti-retour et d'un élément à entraîner au cours des différentes étapes de fonctionnement du dispositif,
- la figure 4 représente de manière schématique la forme des dents de l'élément à entraîner et la forme de l'élément d'entraînement,
- la figure 5 représente de manière schématique la disposition de l'élément d'entraînement et du cliquet anti-retour.

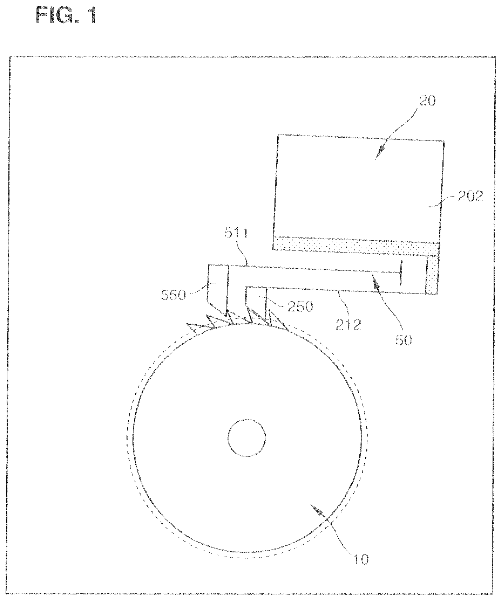

Sur la figure 1, le dispositif comprend un élément à entraîner 10, un dispositif d'entraînement 20 et un dispositif d'indexage 50.
Le dispositif d'entraînement 20 et le dispositif d'indexage 50 sont formés simultanément par microgravure dans un bloc unique en matériau semi-conducteur, par exemple en silicium. L'élément à entraîner 10 peut également être formé dans le même bloc ou être rapporté et disposé en regard du dispositif d'entraînement 20. Le bloc forme ainsi un substrat sur lequel sont agencés les élément gravés.
Dans la suite du texte, l'expression « fixe » qualifie tout élément encastré sur le substrat et l'expression « mobile » qualifie tout élément maintenu à quelques microns d'altitude du substrat, au moyen de suspensions élastiques également encastrées sur le substrat.
L'élément à entraîner 10 comprend une roue dentée mobile en rotation.
L'expression « radial » qualifie tout élément s'étendant suivant une direction radiale par rapport à la roue et l'expression « tangentiel » qualifie tout élément s'étendant suivant une direction tangentielle par rapport à la roue, les directions radiale et tangentielle étant considérées au point de la roue où le dispositif d'entraînement vient en prise avec la roue.

Le dispositif d'entraînement 20 comprend un élément actionneur 202 apte à générer un mouvement alternatif dans une direction générale tangentielle, une lame flexible tangentielle 212, et un élément d'entraînement 250 destiné à venir en prise avec la roue dentée 10. L'élément d'entraînement 250 est relié à l'élément actionneur 202 par l'intermédiaire de la lame flexible tangentielle 212. L'élément d'entraînement 250 présente la forme d'une dent destinée à être engagée entre deux dents successives de la roue dentée.

Le dispositif d'indexage 50 comprend une lame flexible tangentielle 511 et un élément d'indexage 550 destiné à venir en prise avec la roue dentée 10. L'élément d'indexage 550 est relié au substrat par l'intermédiaire d'une lame flexible tangentielle 511. L'élément d'indexage 550 présente la forme d'une dent destinée à être engagée entre deux dents successives de la roue dentée.

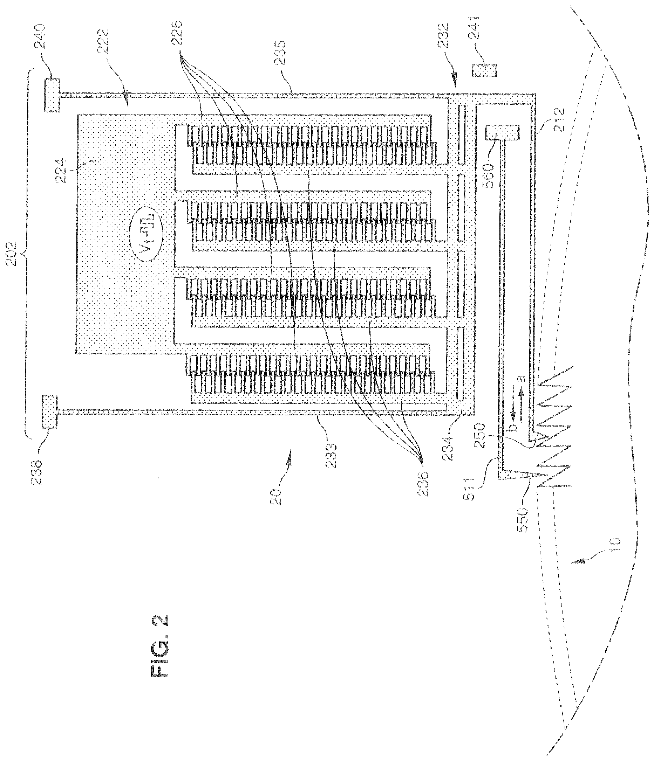

Comme on peut le voir sur la figure 2, l'élément actionneur 202 est un élément actionneur électrostatique présentant une structure à peignes (connus sous l'appellation anglo-saxonne de « comb drive »). Ce type de structure comprend des paires de peignes interdigités.

Le module actionneur 202 est formé d'une partie fixe 222 et d'une partie mobile 232 à laquelle est reliée la lame tangentielle 212.

La partie fixe 222 comprend une électrode tangentielle 224 à partir de laquelle s'étend suivant une direction radiale un ensemble de peignes fixes parallèles 226. Chaque peigne est formé d'une lame principale et d'une série de doigts ou cils parallèles connectés à la lame principale et s'étendant perpendiculairement à celle-ci.

La partie mobile 232 comprend un cadre mobile 234 incluant deux lames flexibles 233 et 235 connectées au substrat par des blocs encastrement 238, 240. Les lames flexibles 233 et 235 forment des suspensions élastiques autorisant une mobilité du cadre 234 par rapport au substrat.

La partie mobile 232 comprend un ensemble de peignes 236 s'étendant à partir du cadre mobile 234 dans une direction générale radiale. Chaque peigne est formé d'une lame principale et d'une série de doigts ou cils parallèles connectés à la lame principale et s'étendant perpendiculairement à celle-ci.

Les peignes 226 de la partie fixe 222 et les peignes 236 de la partie mobile 232 sont disposés parallèlement les uns aux autres et intercalés les uns avec les autres. En outre, chaque peigne mobile 236 est disposé en regard d'un peigne fixe 226 de sorte que les doigts s'intercalent les uns entre les autres, formant ainsi une paire de peignes interdigités.

Les doigts intercalés des peignes interdigités s'apparentent à des condensateurs plans dont l'une des armatures est reliée à l'électrode 224 et l'autre armature est reliée à la masse via les liaisons encastrement 238, 240.

Lorsqu'une tension est appliquée à l'électrode 224, cette tension crée une différence de potentiels entre la partie fixe 222 et la partie mobile 232 de l'élément actionneur 202. Un champ électrique s'établit entre les armatures des condensateurs formées par les doigts des peignes fixes 226 et les doigts des peignes mobiles 236. Ce champ électrique génère une force électrostatique qui tend à attirer les peignes mobiles 236 vers les peignes fixes 226 dans la direction des doigts. Cette force électrostatique entraîne le déplacement du cadre 234 dans la direction tangentielle et par conséquent la translation de la dent d'entraînement 250 par action de la lame 212 dans une direction tangentielle par rapport à la roue 10 dans un premier sens (flèche a).

Le module actionneur 202 comprend également une butée mécanique fixe 241. La butée mécanique 241 limite la déformation de la partie mobile 232 de l'élément actionneur 202 et par conséquent la course de l'élément d'entraînement 250.

Lorsque la tension appliquée à l'électrode 224 s'annule, le cadre 234 revient en position de repos par restitution de l'énergie élastique stockée dans les lames flexibles 233, 235. Cette phase de retour élastique a pour effet d'entraîner la translation de la dent 250 dans une direction tangentielle par rapport à la roue 10 dans un deuxième sens (flèche b), opposé au premier sens.

Autrement dit, dans un premier sens (flèche a), le mouvement de l'élément actionneur 202 est généré par les forces électrostatiques générées entre les peignes fixe 226 et mobile 236, tandis que dans un deuxième sens (flèche b), le mouvement de l'élément actionneur 202 est généré par les forces de rappel élastiques dues à l'énergie emmagasinée par les lames flexibles 233, 235 du cadre 234.

Ainsi, lorsqu'on applique un signal $V_t$ alternatif à l'électrode d'adressage 224 de l'élément actionneur 202, l'élément actionneur génère un mouvement alternatif dans une direction tangentielle par rapport à la roue 10.

La butée 241 est agencée de sorte que l'élément d'entraînement 250 est déplacée pour entraîner la roue 10 d'un pas lors d'une alternance (flèche a).

On va maintenant décrire le procédé de fonctionnement du dispositif.

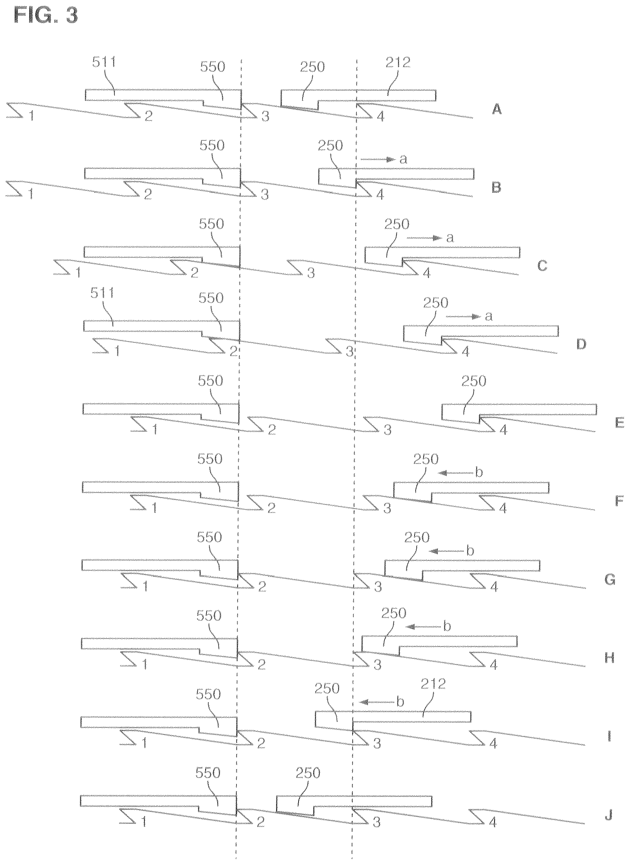

La figure 3 représente de manière schématique les positions relatives de l'élément d'entraînement 250, de l'élément d'indexage 550 et de la roue 10 au cours du déplacement de la roue lorsque l'élément actionneur génère un mouvement alternatif. Le mouvement généré par l'actionneur se compose d'une première alternance, au cours de laquelle l'élément d'entraînement 250 est déplacé dans le sens a, et d'une deuxième alternance, au cours de laquelle l'élément d'entraînement 250 est déplacé dans le sens b, opposé au sens a.

Sur la figure 3, la roue 10 présente sur sa circonférence des dents successives référencées respectivement 1, 2, 3 et 4. Les dents 1, 2, 3 et 4 la roue 10 sont asymétriques. La configuration représentée sur la figure 3 privilégie l'entraînement de la roue 10 dans le sens horaire.

Initialement (en A), l'élément d'indexage 550 est engagé entre deux dents 2 et 3 de la roue 10. L'élément d'entraînement 250 est engagé entre deux dents 3 et 4 de la roue 10.

Au cours de la première alternance (alternance active durant laquelle le mouvement de l'élément d'entraînement 250 est généré par les forces électrostatiques), le dispositif fonctionne selon les étapes suivantes :

Selon une première étape (B), l'élément d'entraînement 250 est entraîné en translation par l'élément actionneur dans une direction tangentielle par rapport à la roue 10 (flèche a). L'élément d'entraînement 250 vient en contact avec la dent 4.

Selon une deuxième étape (C), l'élément d'entraînement 250 tracte la roue 10 de sorte que la roue 10 est déplacée en rotation en sens horaire. La rotation de la roue 10 a pour effet que l'élément d'indexage 550 vient en contact avec la dent 2 de la roue 10.

Selon une troisième étape (D), la rotation de la roue 10 a pour effet que l'élément d'indexage 550 glisse sur la dent 2 de la roue 10. Ceci est possible du fait que la lame 511 est flexible et autorise un mouvement de l'élément d'indexage 550 dans une direction radiale par rapport à la roue 10.

Selon une quatrième étape (E), l'élément d'indexage 550 franchit la dent 2. Du fait de son élasticité, la lame 511 ramène l'élément d'indexage vers la roue 10 de sorte que l'élément d'indexage 550 se trouve maintenant engagé entre les dents 1 et 2. La dent d'entraînement 250 se trouve en fin de course.

Au cours de la deuxième alternance (alternance passive au cours de laquelle le mouvement de l'élément d'entraînement 250 est généré par les forces de rappel élastiques due à l'énergie emmagasinée dans les lames élastiques 233, 235), le dispositif fonctionne selon les étapes suivantes :

Selon une cinquième étape (F), l'élément d'entraînement 250 est entraîné en translation par l'élément actionneur dans une direction tangentielle par rapport à la roue 10 (flèche b). L'élément d'entraînement 250 vient en contact avec la dent 3.

Selon une sixième étape (G), l'élément d'entraînement 250 tracte la roue 10 de sorte que la roue 10 est déplacée en rotation en sens anti-horaire. La rotation de la roue 10 a pour effet que l'élément d'indexage 550 vient en contact avec la dent 2 de la roue 10.

Selon une septième étape (H), l'élément d'indexage 550 bloque la rotation de la roue 10. Le blocage de la roue 10 a pour effet que l'élément d'entraînement 250 glisse sur la dent 3.

Selon une huitième étape (I), l'élément d'entraînement 250 franchit la dent 3. Du fait de son élasticité, la lame 212 ramène l'élément d'entraînement 250 vers la roue 10 de sorte que l'élément d'entraînement 250 se trouve maintenant engagé entre les dents 2 et 3.

Selon une neuvième étape (J), l'élément d'entraînement 250 est revenu dans la position initiale de repos (en A).

De la première à la neuvième étape, la roue 10 a été entraînée en rotation dans le sens horaire et a été déplacée d'un angle correspondant à une dent de la roue.

Ainsi, les étapes qui précèdent sont renouvelées et l'élément d'entraînement 250 déplace la roue 10 selon un mouvement pas à pas, chaque pas correspondant à une dent de la roue.

Le dispositif d'indexage 50 bloque la roue en rotation lorsque l'élément d'entraînement 250 revient en position de repos. Le dispositif d'indexage constitue un cliquet qui permet la rotation de la roue dans un sens unique.

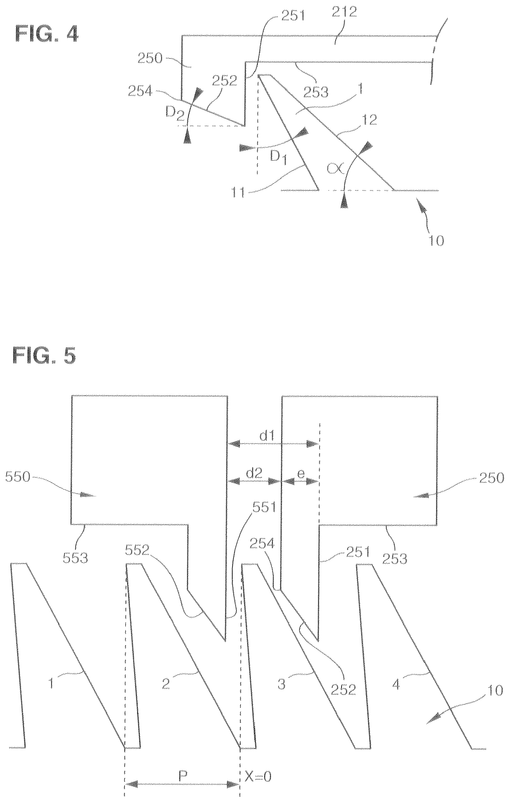

La figure 4 représente de manière schématique la forme d'une dent 1 de la roue 10 et la forme de la dent d'entraînement 250.

Comme on peut le voir sur cette figure, la dent 1 de la roue 10 comprend une face d'entraînement 11 sur laquelle la dent d'entraînement 250 vient en contact pour tracter la roue 10 au cours de la première alternance (a) et une face de guidage 12 sur laquelle la dent d'entraînement 250 glisse au cours de la deuxième alternance (b) du cycle d'entrainement.

La face d'entraînement 11 est orientée de manière à former un angle de dépouille D1 par rapport à la direction radiale de la roue 10, l'angle de dépouille D1 étant de préférence compris entre 5 et 15 degrés environ.

La face de guidage 12 de la dent 1 est orientée de manière à former un angle $\alpha$ aussi faible que possible par rapport à la direction tangentielle de la roue. L'angle $\alpha$ est de préférence compris entre 20 et 60 degrés environ.

La dent d'entraînement 250 comprend une face d'entraînement 251 destinée à venir en contact avec la roue 10 pour tracter la roue 10 au cours de la première alternance (a), une face de guidage 252 destinée à glisser sur la roue 10 au cours de la deuxième alternance (b) et une face d'appui 253 destinée à venir en appui sur la roue 10 pour limiter l'engagement de la dent d'entraînement 250 entre les dents de la roue 10.

La face d'entraînement 251 est orientée de manière à former un angle nul par rapport à la direction radiale de la roue 10.

La face de guidage 252 est orientée de manière à former un angle D2 par rapport à la direction tangentielle de la roue 10, l'angle D2 étant de préférence compris entre 0 et 30 degrés environ.

La face d'appui 253 est orientée est orientée de manière à former un angle nul par rapport à la direction tangentielle de la roue 10. La face d'appui 253 et la face de guidage 251 forment ainsi un épaulement qui limite l'engagement de la dent d'entraînement 250 entre les dents de la roue 10.

Les faces d'entraînement 11 et 251 ne sont pas parallèles entre elles mais forment un angle D1. Cette caractéristique a pour effet de limiter la surface de contact entre les faces d'entraînement 11 et 251 qui pourrait conduire à une adhésion irréversible entre la dent d'entraînement 250 et la dent 1 de la roue 10 lorsque la dent d'entraînement 250 tracte la roue 10.

De même, les faces de guidage 12 et 252 ne sont pas parallèles entre elles mais forment un angle. Cette caractéristique a pour effet de limiter la surface de contact entre les faces de guidage 12 et 252 qui pourrait conduire à une adhésion irréversible entre la dent d'entraînement 250 et la dent 1 de la roue 10 lorsque la dent d'entraînement 250 glisse sur la roue 10. Ainsi, les faces de guidage 12 et 252 sont en contact au niveau d'un point 254 de la face de guidage 252 de l'élément d'entraînement 250.

Par ailleurs, l'épaulement formé par la face d'appui 253 et la face de guidage 251 de la dent d'entraînement 250 évite que la dent d'entraînement 250 ne se trouve bloquée entre les dents de la roue 10. En effet, la pénétration de la dent d'entraînement 250 en fond de denture de la roue 10 pourrait conduire éventuellement à un blocage irréversible du dispositif d'entraînement.

La figure 5 représente de manière schématique la disposition de l'élément d'entraînement 250 et de l'élément d'indexage 550 en position de repos (c'est-à-dire lorsque l'élément actionneur 202 n'est pas alimenté).

L'élément d'entraînement 250 et l'élément d'indexage 550 présentent des formes similaires.

L'élément d'indexage 550 comprend une face de blocage 551 destinée à venir en contact avec la roue 10 pour bloquer la roue 10 au cours de la deuxième alternance (b), une face de guidage 552 destinée à glisser sur la roue 10 au cours de la première alternance (a) et une face d'appui 553 destinée à venir en appui sur la roue 10 pour limiter l'engagement de la dent d'indexage 550 entre les dents de la roue 10.

On considère que l'élément actionneur 202 génère un mouvement alternatif dont l'amplitude est $\Delta$. Autrement dit $\Delta$ est la course de l'élément actionneur.

Pour que l'élément d'entraînement 250 franchisse une dent de la roue 10 au cours de la deuxième alternance (alternance b), il faut que la déformation élastique résiduelle de l'élément actionneur 202 soit suffisante pour permettre le glissement de l'élément d'entraînement 250 sur la roue 10 lorsque l'élément d'entraînement 250 se trouve au sommet de la dent à franchir (comme illustré sur la figure 3, dans la configuration I).

Lorsque l'élément d'entraînement 250 se trouve au sommet de la dent à franchir, la déformation élastique résiduelle est définie géométriquement comme suit :

$$\Delta_{résiduelle} = p - e - d_2 + k \cdot p \qquad [1]$$

où :

$\Delta_{résiduelle}$ est la déformation élastique résiduelle de l'élément actionneur, $p$ est le pas de la roue 10,
$e$ est la distance entre le point de contact 254 de la face de guidage 252 et la face d'entraînement 251 de l'élément d'entraînement 250,
$d_2$ est la distance entre le point de contact 254 et la face de blocage 551 de l'élément d'indexage 550,
et $k$ est un entier positif.

Le fonctionnement du dispositif impose que la déformation élastique résiduelle définie par la relation [1] soit positive et que dans la disposition relative de l'élément d'entraînement 250 et de l'élément d'indexage 550 illustrée sur la figure 5, la distance $d_2$ soit positive. Autrement dit, la distance $d_2$ doit de manière générale être supérieure à un multiple $k$ du pas de la roue 10 si $k + 1$ dents de la roue 10 sont intercalées entre l'élément d'entraînement 250 et l'élément d'indexage 550. Soit :

$$\begin{cases} p - e - d_2 + k \cdot p \succ 0 \\ d_2 \succ k \cdot p \end{cases} \qquad [2]$$

D'où :

$$k \cdot p \prec d_2 \prec p - e + k \cdot p \qquad [3]$$

Si on choisit par exemple $k = 0$ (comme représenté sur la figure 5), on obtient :

$$0 \prec d_2 \prec p - e \qquad [4]$$

Par exemple, si on considère les paramètres suivants :

$p = 15\mu m$
$e = 5\mu m$

On doit avoir :

$$0 \prec d_2 \prec 10\mu m \qquad [5]$$

Si on choisit $k = 1$, on doit avoir :

$$15\mu m \prec d_2 \prec 25\mu m \qquad [6]$$

Si on choisit $k = 2$, on doit avoir :

$$30\mu m \prec d_2 \prec 40\mu m \qquad [7]$$

**Revendications**

**1.** Dispositif MEMS comprenant un élément à entraîner (10), un élément d'entraînement (250) destiné à venir en prise avec l'élément à entraîner (10) et un élément actionneur (202) apte à générer un mouvement alternatif pour déplacer l'élément d'entraînement (250), l'élément d'entraînement (250) et l'élément actionneur (202) étant formés par gravure dans un bloc en matériau semi-conducteur, l'élément d'entraînement (250) présentant :

- une face d'entraînement (251) propre à venir en contact avec l'élément à entraîner (10) pour tracter l'élément à entraîner (10) au cours d'une première alternance (a) du mouvement généré par l'élément actionneur (202), et
- une face de guidage (252) propre à glisser sur l'élément à entraîner (10) au cours d'une deuxième alternance (b) en sens opposé du mouvement généré par l'élément actionneur (202),
de sorte que l'élément à entraîner (10) peut être déplacé selon un mouvement pas à pas par l'élément d'entraînement (250), **caractérisé en ce que** l'élément d'entraînement (250) présente une face d'appui (253) formant un épaulement avec la face d'entraînement (251) et propre à limiter la mise en prise de l'élément d'entraînement (250) avec l'élément à entraîner (10) au cours de la première alternance (a).

**2.** Dispositif selon la revendication 1, dans lequel l'élément à entraîner (10) est un élément denté.

**3.** Dispositif selon la revendication 2, dans lequel les dents (1, 2, 3, 4) de l'élément à entraîner (10) sont asymétriques.

**4.** Dispositif selon l'une des revendications 2 ou 3, dans lequel chaque dent (1, 2, 3, 4) de l'élément à entraîner (10) présente une face d'entraînement (11) sur laquelle l'élément d'entraînement (250) vient en contact pour tracter l'élément à entraîner (10) au cours d'une première alternance (a) et une face de guidage (12) sur laquelle l'élément d'entraînement (250) glisse au cours d'une deuxième alternance (b).

**5.** Dispositif selon l'une des revendications 2 à 4, le dispositif étant agencé de sorte que :

- au cours de la première alternance (a), l'élément d'entraînement (250) est engagé entre deux dents (3, 4) de l'élément à entraîner (10),
- au cours de la deuxième alternance (b), l'élément d'entraînement (250) franchit l'une des deux dents (3) et vient s'engager entre deux autres dents (2, 3) adjacentes de l'élément à entraîner (10).

**6.** Dispositif selon l'une des revendications qui précèdent, dans lequel l'élément d'entraînement (202) comprend au moins une lame flexible (233, 235) agencée de sorte qu'au cours de la première alternance (a) l'élément d'entraînement (250) est déplacé dans un premier sens, ce qui entraîne la déformation de la lame flexible (233, 235), et au cours de la deuxième alternance (b), l'élément d'entraînement est déplacé dans un deuxième sens, opposé au premier sens, par retour élastique de la lame flexible (233, 235).

7. Dispositif selon les revendications 5 et 6 en combinaison, dans lequel l'élément d'entraînement (250) franchit l'une des deux dents (3) par restitution d'énergie élastique résiduelle emmagasinée dans la lame flexible (233, 235).

8. Dispositif selon l'une des revendications qui précèdent, comprenant un cliquet anti-retour (50) apte à bloquer l'élément à entraîner (10) au cours de la deuxième alternance (b).

9. Dispositif selon la revendication 8, dans lequel le cliquet anti-retour (50) comprend un élément d'indexage (550) apte à :

- au cours de la première alternance (a) du mouvement généré par l'élément actionneur (202), glisser sur l'élément à entraîner (10),
- au cours de la deuxième alternance (b), venir en prise avec l'élément à entraîner (10) pour bloquer l'élément à entraîner (10).

10. Dispositif selon l'une des revendications 8 ou 9, dans lequel le cliquet (50) présente une face de guidage (552) destinée à glisser sur l'élément à entraîner (10) au cours de la première alternance (a) et une face de blocage (551) sur laquelle l'élément à entraîner (10) vient en contact pour bloquer l'élément à entraîner (10) au cours de la deuxième alternance (b).

11. Dispositif selon l'une des revendications qui précèdent, dans lequel l'élément à entraîner (10) est un élément denté présentant un pas, l'élément d'entraînement (250) comprend une face de guidage (252) destinée à entrer en contact avec l'élément à entraîner (10) au niveau d'un point de contact (254) lors du glissement de l'élément d'entraînement (250) sur l'élément à entraîner (10),
et dans lequel au repos :

$$\begin{cases} d_2 \prec p - e + k \cdot p \\ d_2 \succ k \cdot p \end{cases}$$

où :

$p$ est le pas de l'élément à entraîner (10),
$e$ est la distance entre un point de contact (254) de la face de guidage (252) et la face d'entraînement (251) de l'élément d'entraînement (250),
$d_2$ est la distance entre le point de contact (254) de la face de guidage (252) de l'élément d'entraînement (250) et la face de blocage (551) du cliquet (50),
et $k$ est un entier positif.

12. Dispositif selon l'une des revendications qui précèdent, comprenant des moyens de précontrainte élastique (212) pour maintenir l'élément d'entraînement (250) contre l'élément à entraîner (10).

13. Procédé de fonctionnement d'un dispositif selon lune des revendications 1 à12 comprenant un élément à entraîner (10), un élément d'entraînement (250) et un élément actionneur (202), l'élément d'entraînement (250) et l'élément actionneur (202) étant formés par gravure dans un bloc en matériau semi-conducteur, le procédé comprenant les étapes selon lesquelles :

- on commande l'élément actionneur (202) pour qu'il génère un mouvement alternatif pour déplacer l'élément d'entraînement (250),
- au cours d'une première alternance (a) du mouvement généré par l'élément actionneur (202), l'élément d'entraînement (250) vient en prise avec l'élément à entraîner (10) pour tracter l'élément à entraîner (10) via une face d'entraînement (251) venant en contact avec l'élément à entraîner (10),
- au cours d'une deuxième alternance (b) en sens opposé générée par l'élément actionneur (202), l'élément d'entraînement (250) glisse sur l'élément à entraîner (10),

de sorte que l'élément à entraîner (10) est déplacé selon un mouvement pas à pas par l'élément d'entraînement (202), et en ce que :

au cours de la première alternance (a), la mise en prise de l'élément d'entrainement (250) avec l'élément à entraîner (10) est limitée par une face d'appui (253) de l'élément d'entraînement (250), la face d'appui (253) formant un épaulement avec la face de d'entrainement (251).

**Patentansprüche**

1.  MEMS-Vorrichtung mit einem anzutreibenden Element (10), einem Antriebselement (250), das dafür vorgesehen ist, mit dem anzutreibenden Element (10) in Eingriff zu kommen, und einem Betätigungselement (202), das eine Hin- und Herbewegung erzeugen kann, um das Antriebselement (250) zu bewegen, wobei das Antriebselement (250) und das Betätigungselement (202) durch Ätzen in einen Block aus Halbleitermaterial gebildet werden, wobei das Antriebselement (250) aufweist:

    - eine Antriebsfläche (251), die dafür geeignet ist, mit dem anzutreibenden Element (10) in Kontakt zu kommen, um das anzutreibende Element (10) während eines ersten Wechsels (a) der durch das Betätigungselement(202) erzeugten Bewegung zu ziehen, und

    - eine Führungsfläche (252), die dafür geeignet ist, während eines zweiten Wechsels (b) in der entgegengesetzten Richtung der durch das Betätigungselement (202) erzeugten Bewegung, auf dem anzutreibenden Element (10) zu gleiten,

    so dass das anzutreibende Element (10) durch das Antriebselement (250) in einer schrittweisen Bewegung bewegt werden kann,

    **dadurch gekennzeichnet, dass** das Antriebselement (250) eine Auflagefläche (253) aufweist, die mit der Antriebsfläche (251) einen Absatz bildet und geeignet ist, den Eingriff des Antriebselements (250) mit dem anzutreibenden Element (10) während des ersten Wechsels (a) zu begrenzen.

2.  Vorrichtung nach Anspruch 1, wobei das anzutreibende Element (10) ein gezahntes Element ist.

3.  Vorrichtung nach Anspruch 2, wobei die Zähne (1, 2, 3, 4) des anzutreibenden Elements (10) asymmetrisch sind.

4.  Vorrichtung nach einem der Ansprüche 2 oder 3, wobei jeder Zahn (1, 2, 3, 4) des anzutreibenden Elements (10) eine Antriebsfläche (11) aufweist, auf der das Antriebselement (250) in Kontakt kommt, um das anzutreibende Element (10) während eines ersten Wechsels (a) zu ziehen, und eine Führungsfläche (12) aufweist, auf der das Antriebselement (250) während eines zweiten Wechsels (b) gleitet.

5.  Vorrichtung nach einem der Ansprüche 2 bis 4, wobei die Vorrichtung derart angeordnet, dass:

    - sich das Antriebselement (250) während des ersten Wechsels (a) zwischen zwei Zähnen (3, 4) des anzutreibenden Elements (10) im Eingriff befindet,
    - das Antriebselement (250) während des zweiten Wechsels (b) einen der beiden Zähne (3) passiert und zwischen zwei weiteren benachbarten Zähnen (2, 3) des anzutreibenden Elements (10) in Eingriff kommt.

6.  Vorrichtung nach einem der vorstehenden Ansprüche, wobei das Antriebselement (202) mindestens eine flexible Lamelle (233, 235) umfasst, die derart angeordnet ist, dass das Antriebselement (250) während des ersten Wechsels (a) in einer ersten Richtung bewegt wird, wodurch sich die flexible Lamelle (233, 235) verformt, und dass das Antriebselement während des zweiten Wechsels (b) durch die Rückfederung der flexiblen Lamelle (233, 235) in einer zweiten Richtung bewegt wird, die der ersten Richtung entgegengesetzt ist.

7.  Vorrichtung nach den Ansprüchen 5 und 6 in Kombination, wobei das Antriebselement (250) einen der beiden Zähne (3) passiert durch die Freisetzung von elastischer Restenergie, die in der flexiblen Lamelle (233, 235) gespeichert ist.

8.  Vorrichtung nach einem der vorstehenden Ansprüche umfassend eine Sperrklinke (50), die das anzutreibende Element (10) während des zweiten Wechsels (b) arretieren kann.

9.  Vorrichtung nach Anspruch 8, wobei die Sperrklinke (50) ein Indexierungselement (550) umfasst, das:

- während des ersten Wechsels (a) der durch das Betätigungselement (202) erzeugten Bewegung auf dem anzutreibenden Element (10) gleiten kann,
- während des zweiten Wechsels (b) mit dem anzutreibenden Element (10) in Eingriff kommen kann, um das anzutreibende Element (10) zu arretieren.

10. Vorrichtung nach einem der Ansprüche 8 oder 9, wobei die Sperrklinke (50) eine Führungsfläche (552) aufweist, die dafür vorgesehen ist, während des ersten Wechsels (a) auf dem anzutreibenden Element (10) zu gleiten, und eine Sperrfläche (551) aufweist, auf der das anzutreibende Element (10) während des zweiten Wechsels (b) in Eingriff kommt, um das anzutreibende Element (10) zu arretieren.

11. Vorrichtung nach einem der vorstehenden Ansprüche, wobei das anzutreibende Element (10) ein gezahntes Element ist, das eine Teilung aufweist, wobei das Antriebselement (250) eine Führungsfläche (252) aufweist, die dafür vorgesehen ist, an einem Kontaktpunkt (254) während des Gleitens des Antriebselements (250) auf dem anzutreibenden Element (10) mit dem anzutreibenden Element (10) in Kontakt zu kommen, und wobei im Ruhezustand:

$$\begin{cases} d_2 \prec p - e + k \cdot p \\ d_2 \succ k \cdot p \end{cases}$$

worin:

$p$ die Teilung des anzutreibenden Elements (10) ist,
$e$ der Abstand zwischen einem Kontaktpunkt (254) der Führungsfläche (252) und der Antriebsfläche (251) des Antriebselements (250) ist,
$d_2$ der Abstand zwischen dem Kontaktpunkt (254) der Führungsfläche (252) des Antriebselements (250) und der Sperrfläche (551) der Sperrklinke (50) ist,
und $k$ eine positive ganze Zahl ist.

12. Vorrichtung nach einem der vorstehenden Ansprüche umfassend Mittel zur elastischen Vorspannung (212), um das Antriebselement (250) gegen das anzutreibende Element (10) gedrückt zu halten.

13. Verfahren zum Betrieb einer Vorrichtung nach einem der Ansprüche 1 bis 12 mit einem anzutreibenden Element (10), einem Antriebselement (250) und einem Betätigungselement (202), wobei das Antriebselement (250) und das Betätigungselement (202) durch Ätzen in einen Block aus Halbleitermaterial gebildet werden, wobei das Verfahren die Schritte umfasst, in denen:

- das Betätigungselement (202) dahingehend gesteuert wird, dass es eine Hin- und Herbewegung erzeugt, um das Antriebselement (250) zu bewegen,
- das Antriebselement (250) während eines ersten Wechsels (a) der durch das Betätigungselement (202) erzeugten Bewegung mit dem anzutreibenden Element (10) in Eingriff kommt, um das anzutreibende Element (10) über eine Antriebsfläche (251) zu ziehen, die mit dem anzutreibenden Element (10) in Kontakt kommt,
- das Antriebselement (250) während eines durch das Betätigungselement (202) erzeugten zweiten Wechsels (b) in der entgegengesetzten Richtung auf dem anzutreibenden Element (10) gleitet,
so dass das anzutreibende Element (10) durch das Antriebselement (202) in einer schrittweisen Bewegung bewegt wird, und dass:
der Eingriff des Antriebselements (250) mit dem anzutreibenden Element (10) während des ersten Wechsels (a) durch eine Auflagefläche (253) des Antriebselements (250) begrenzt wird, wobei die Auflagefläche (253) mit der Antriebsfläche (251) einen Absatz bildet.

**Claims**

1. A MEMS device comprising an element to be driven (10), a driving element (250) intended to be engaged with the element to be driven (10) and an actuator element (202) able generate a reciprocating movement to move the driving element (250), the driving element (250) and the actuator element (202) being formed by etching in a block made of semiconductor material, the driving element (250) having:

- a driving face (251) adapted to come into contact with the element to be driven (10) to tow the element to be driven (10) during a first alternation (a) of the movement generated by the actuator element (202), and

- a guide face (252) adapted to slide on the element to be driven (10) during a second alternation (b) in the opposite direction of the movement generated by the actuator element (202), so that the element to be driven (10) can be moved in a stepwise movement by the driving element (250),

**characterized in that** the driving element (250) has an abutment face (253) forming a shoulder with the driving face (251) and adapted to limit the engagement of the driving element (250) with the element to be driven (10) during the first alternation (a).

2. The device according to claim 1, wherein the element to be driven (10) is a toothed element.

3. The device according to claim 2, wherein the teeth (1, 2, 3, 4) of the element to be driven (10) are asymmetrical.

4. The device according to any of claims 2 or 3, wherein each tooth (1, 2, 3, 4) of the element to be driven (10) has a driving face (11) on which the driving element (250) comes into contact to tow the element to be driven (10) during a first alternation (a) and a guide face (12) on which the driving element (250) slides during a second alternation (b).

5. The device according to any of claims 2 to 4, the device being arranged so that:

- during the first alternation (a), the driving element (250) is engaged between two teeth (3, 4) of the element to be driven (10),
- during the second alternation (b), the driving element (250) crosses one of the two teeth (3) and engages between two others adjacent teeth (2, 3) of the element to be driven (10).

6. The device according to any of the preceding claims, wherein the driving element (202) comprises at least one flexible blade (233, 235) arranged so that, during the first alternation (a), the driving element (250) is moved in a first direction, which causes the deformation of the flexible blade (233, 235), and during the second alternation (b), the driving element is moved in a second direction, opposite to the first direction, by elastic return of the flexible blade (233, 235).

7. The device according to claims 5 and 6 in combination, wherein the driving element (250) crosses one of the two teeth (3) by release of residual elastic energy stored in the flexible blade (233, 235).

8. The device according to any of the preceding claims, comprising an anti-reverse pawl (50) able to block the element to be driven (10) during the second alternation (b).

9. The device according to claim 8, wherein the anti-reverse pawl (50) comprises an indexing element (550) able:

- during the first alternation (a) of the movement generated by the actuator element (202), to slide on the element to be driven (10),
- during the second alternation (b), to be engaged with the element to be driven (10) to block the element to be driven (10).

10. The device according to any of claims 8 or 9, wherein the pawl (50) has a guide face (552) intended to slide on the element to be driven (10) during the first alternation (a) and a blocking face (551) on which the element to be driven (10) comes into contact to block the element to be driven (10) during the second alternation (b).

11. The device according to any of the preceding claims, wherein the element to be driven (10) is a toothed element having a pitch, the driving element (250) comprises a guide face (252) intended to come into contact with the element to be driven (10) at a contact point (254) upon sliding of the driving element (250) on the element to be driven (10), and wherein at rest:

$$\begin{cases} d_2 \prec p - e + k \cdot p \\ d_2 \succ k \cdot p \end{cases}$$

where:

*p* is the pitch of the element to be driven (10),

*e* is the distance between a contact point (254) of the guide face (252) and the driving face (251) of the driving element (250),

$d_2$ is the distance between the contact point (254) of the guide face (252) of the driving element (250) and the blocking face (551) of the pawl (50),

and *k* is a positive integer.

**12.** The device according to any of the preceding claims, comprising elastic prestressing means (212) for holding the driving element (250) against the element to be driven (10).

**13.** A method for operating a device according to any of claims 1 to 12 comprising an element to be driven (10), a driving element (250) and an actuator element (202), the driving element (250) and the actuator element (202) being formed by etching in a block of made semiconductor material, the method comprising the steps according to which:

    - the actuator element (202) is controlled so that it generates a reciprocating movement to move the driving element (250),

    - during a first alternation (a) of the movement generated by the actuator element (202), the driving element (250) engages with the element to be driven (10) to tow the element to be driven (10) via a driving face (251) coming into contact with the element to be driven (10),

    - during a second alternation (b) in the opposite direction generated by the actuator element (202), the driving element (250) slides on the element to be driven (10),

    so that the element to be driven (10) is moved according to a stepwise movement by the driving element (202), and in that:

    during the first alternation (a), the engagement of the driving element (250) with the element to be driven (10) is limited by an abutment face (253) of the driving element (250), the abutment face (253) forming a shoulder with the driving face (251).

FIG. 1

FIG. 2

# FIG. 3

**FIG. 4**

**FIG. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2852111
- US 6313562 B
- US 4579014 A